# EUROPÄISCHE PATENTSCHRIFT

(11) **EP 2 444 287 B1**
(45) Veröffentlichungstag und Bekanntmachung des Hinweises auf die Patenterteilung: **21.08.2013**
(21) Anmeldenummer: 11008363.1
(22) Anmeldetag: 18.10.2011
(51) Int. Cl.: B60R 11/00, B60P 3/00, F16B 2/06

(54) **Klemmvorrichtung**
Clamping device
Dispositif de serrage

(30) Priorität: 19.10.2010 DE 202010014377 U
(43) Veröffentlichungstag der Anmeldung: 25.04.2012
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- US-A- 4 846 431
- US-A- 5 228 739
- US-A- 5 701 991
- US-A- 5 967 888
- US-A1- 2007 096 486
- US-B1- 7 497 493

## Beschreibung

Die Erfindung betrifft eine Klemmvorrichtung zum Halten mindestens eines Gegenstandes an einer Säule eines Fahrzeugs, insbesondere eines Flurförderfahrzeugs gemäß dem Oberbegriff des Patentanspruchs 1.

Aus der US 4,846,431 ist ein Verbindungselement für Möbel bekannt. Dieses besteht aus einer im Wesentlichen U-förmigen Klemmschelle, die in ein C-Profil eingreift. Die Klemmschelle ist dabei zweiteilig ausgebildet, wobei beide Teile über eine Art Drehgelenk miteinander verbindbar sind. Die Teile werden mittels einer Schraube gegeneinander gedrückt, um die gewünschte Verbindungswirkung zu erzielen. In montierter Lage liegt ein Kopf der Schraube plan auf einer Anlagefläche der Klemme an.

Aus der US 5,967,888 ist ein Schraubstock zum Schärfen von Angelhaken bekannt. Dieser Schraubstock besteht aus einer festen und einer verstellbaren Backe. Beide Backen werden von einer Schraube durchsetzt, durch die die Backen gegeneinander drückbar sind. In geklemmter Lage liegt ein Kopf der Schraube nicht mehr plan an der bewegbaren Backe an. Er berührt vielmehr die bewegliche Backe nur punktuell.

Aus der DE 20 2008 016 626 Ul ist eine gattungsgemäße Klemmvorrichtung bekannt, die an einer Säule eines Flurförderfahrzeugs festgeklemmt werden kann. Diese Klemmvorrichtung besteht aus zwei Backen, die mittels einer Schraube gegeneinander verspannt werden können. Beim Festziehen der Schraube werden die beiden Spannbacken gegeneinander gezogen und verschwenkt, wodurch die erforderliche Klemmwirkung erzielt wird. Diese bekannte Klemmvorrichtung hat sich in der Praxis gut bewährt und bildet den Ausgangspunkt der vorliegenden Erfindung.

Der Erfindung liegt die Aufgabe zugrunde, eine Klemmvorrichtung der eingangs genannten Art zu schaffen, die auch unter sehr beengten Platzverhältnissen einsetzbar ist.

Diese Aufgabe wird erfindungsgemäß mit den Merkmalen des Patentanspruchs 1 gelöst.

Die Klemmvorrichtung gemäß Anspruch 1 dient zum Halten mindestens eines Gegenstandes an einer Säule eines Fahrzeugs, insbesondere eines Flurförderfahrzeugs. Dabei ist es unerheblich, welcher Art der Gegenstand ist. Beispielsweise kommen für den Gegenstand Rückspiegel, Ablagen, Trittbretter, Rückhaltesysteme, Türen, Schlösser oder Sicherheitsgurte in Frage. Die genannte Aufzählung ist dabei nicht abschließend zu verstehen. Damit die Klemmvorrichtung an der Säule festlegbar ist, weist sie mindestens eine erste und zweite Spannbacke auf. Grundsätzlich könnte die Klemmvorrichtung noch weitere Spannbacken aufweisen, dies ist jedoch für die weitere Betrachtung unerheblich. Insbesondere kann der erfinderische Vorteil bereits mit zwei Spannbacken erzielt werden. Um die Spannbacken gegeneinander zu verspannen, weist die Klemmvorrichtung mindestens eine Schraube auf. Diese mindestens eine Schraube durchsetzt eine Durchgangsbohrung der ersten Spannbacke und ist in der zweiten Spannbacke festgelegt. Die Art der Festlegung steht grundsätzlich frei, wobei insbesondere an eine Gewindebohrung in der zweiten Spannbacke gedacht ist, welche passend zur mindestens einen Schraube ausgebildet ist. Alternativ könnte auch eine Mutter vorgesehen sein, in der die mindestens eine Schraube festgelegt ist. Grundsätzlich wäre es jedoch auch vorstellbar, eine Gewindebohrung im zu haltenden Gegenstand zur Festlegung der Schraube einzusetzen. Damit die mindestens eine Schraube eine Zugkraft auf die erste Spannbacke ausüben kann, weist die erste Spannbacke mindestens eine Anlagefläche für einen Kopf der mindestens einen Schraube auf. Der Kopf der mindestens einen Schraube drückt dabei gegen die Anlagefläche und führt auf diese Weise zur gewünschten Klemmwirkung zwischen den beiden Spannbacken und der Säule. Die beiden Spannbacken sind dabei derart ausgebildet, dass sie beim Festziehen der mindestens einen Schraube relativ zueinander um eine Schwenkachse verschwenkbar sind. An dieser Schwenkachse berühren sich die beiden Spannbacken und halten sie auf diese Weise gegeneinander auf Abstand.

Zur Erzielung einer ausreichend starken Spannwirkung der Spannbacken gegeneinander ist es wichtig, dass die mindestens eine Schraube von der genannten Schwenkachse hinreichend weit beabstandet ist. Nur auf diese Weise wird eine ausreichende Hebelwirkung erzielt, um die beiden Spannbacken gegeneinander zu verschwenken. Dies ist unter beengten Platzverhältnissen oftmals nicht möglich, so dass die Schwenkachse dann nahe an der mindestens einen Schraube angeordnet sein muss. Damit steht allerdings nur ein unzureichend kurzer Hebel zur Verfügung, um die Spannbacken gegeneinander zu ziehen. Der kurze verfügbare Hebel reicht oftmals nicht aus, um den Gegenstand hinreichend sicher an der Säule des Fahrzeugs zu halten.

Zur Lösung dieses Problems wird die Anlagefläche spitzwinkelig zur Schraubenachse angestellt. Üblicherweise ist die Anlagefläche für einen Schraubenkopf rechtwinkelig zur Schraubenachse angeordnet, um eine flächige Auflage des Schraubenkopfes an der Anlagefläche zu erzielen. Hier wird bewusst von dieser üblichen Konstruktionsregel abgewichen und ein spitzer Winkel zwischen der Anlagefläche einerseits und dem Schraubenkopf andererseits vorgesehen. Dieser Winkel ist dabei derart bemessen, dass der Kopf der mindestens einen Schraube die mindestens eine Auflage in einem Punkt berührt, der weiter von der Schwenkachse entfernt ist als die Schraubenachse. Diese Bedingung wird dabei für alle Lagen des Spannvorgangs erfüllt. Auf diese Weise ist sichergestellt, dass zumindest die Entfernung zwischen der Schwenkachse und der Schraubenachse als Hebelweg für den Spannvorgang zur Verfügung steht. Bei einer üblichen parallelen Ausbildung zwischen dem Schraubenkopf und der Anlagefläche stünde nur der Abstand zwischen der Schwenkachse und dem dieser am nächsten liegende Punkt des Schraubenkopfes für den Spannvorgang zur Verfügung. Dieser fällt unter beengten Platzverhältnissen oftmals verschwindend gering aus. Damit kann diese Klemmvorrichtung auch unter sehr beengten Platzverhältnissen, die nicht viel über den Außendurchmesser des Schraubenkopfes hinausgehen, eingesetzt werden.

Zur weiteren Verbesserung der Klemmwirkung ist es gemäß Anspruch 2 günstig, wenn der Berührungspunkt des Kopfes der mindestens einen Schraube weiter von der Schraubenachse entfernt ist als eine Halbierende zwischen der Schraubenachse und dem von der Schraubenachse am weitesten entfernten Punkt des Kopfes. Auf diese Weise verlängert sich der Hebelweg zur Erzielung der Klemmwirkung noch einmal um wenigstens den halben Radius des Schraubenkopfes.

Zur Erzielung einer optimalen Klemmwirkung ist es gemäß Anspruch 3 günstig, wenn der Berührungspunkt des Kopfes der mindestens einen Schraube nahe am von der Schwenkachse am weitesten entfernten Punkt des Kopfes liegt. Damit ergibt sich der größtmögliche Hebelweg auch unter sehr beengten Platzverhältnissen.

Um eine definierte Schwenkachse zwischen den Spannbacken zu erreichen, ist es gemäß Anspruch 4 vorteilhaft, wenn im Bereich der Schwenkachse an der ersten und/oder zweiten Spannbacke mindestens ein Vorsprung vorgesehen ist. Dieser Vorsprung ist zur gegenüberliegenden zweiten bzw. ersten Spannbacke gerichtet und bildet auf diese Weise eine Anlagelinie zwischen den beiden Spannbacken. Diese Linie definiert dabei die Schwenkachse der Spannbacken gegeneinander.

Schließlich ist es gemäß Anspruch 5 günstig, wenn der mindestens eine Vorsprung in Schwenkrichtung gerundet ausgebildet ist. Damit ergibt sich ein kontinuierlicher Schwenkvorgang, bei dem die eine Spannbacke am Vorsprung der anderen abrollt.

Der Erfindungsgegenstand wird beispielhaft anhand der Zeichnung erläutert, ohne den Schutzumfang zu beschränken.

Es zeigt:
- Figur 1: eine Schnittdarstellung einer Klemmvorrichtung am Beginn des Spannvorgangs und
- Figur 2: die Klemmvorrichtung gemäß Figur 1 in geklemmter Lage.

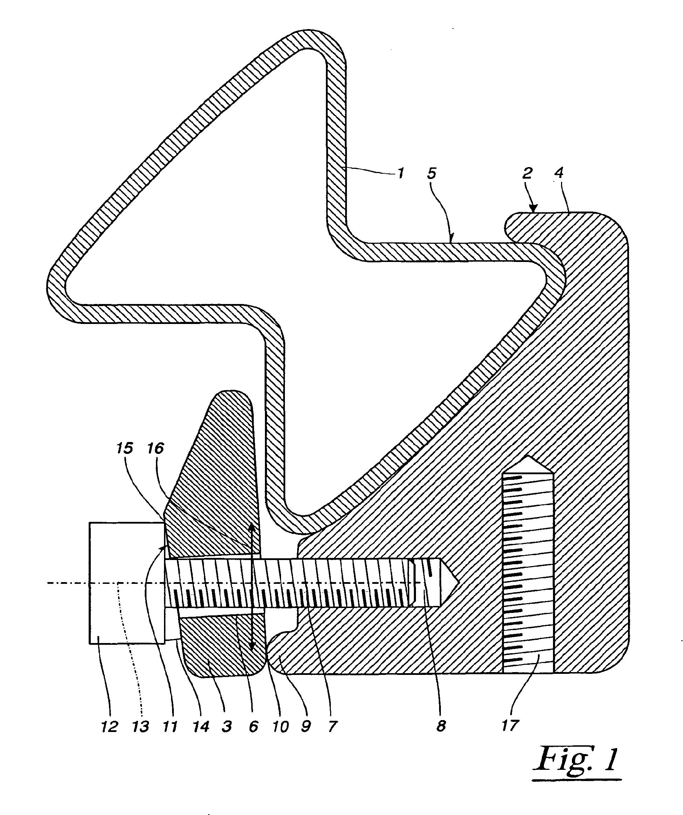

Die Figur 1 zeigt eine Schnittdarstellung durch eine Säule 1 eines Fahrzeugs, insbesondere eines Flurförderfahrzeugs und einer Klemmvorrichtung 2. Die Klemmvorrichtung 2 weist eine erste Spannbacke 3 und eine zweite Spannbacke 4 auf. Beide Spannbacken 3, 4 sind an eine Außenkontur 5 der Säule 1 angepasst und legen an dieser an. Sie umfassen zusammengenommen die Säule 1 so weit, dass eine Klemmung eintreten kann.

In der ersten Spannbacke 3 ist eine Durchgangsbohrung 6 vorgesehen, die von einer Schraube 7 durchsetzt ist. In der zweiten Spannbacke 4 ist eine Gewindebohrung 8 vorgesehen, in der die Schraube 7 festlegbar ist. Insbesondere ist ein Gewinde der Gewindebohrung 8 passend zur Schraube 7 ausgebildet.

An der zweiten Spannbacke 4 ist ein Vorsprung 9 vorgesehen, der gegen die erste Spannbacke 3 gerichtet ist. Dieser Vorsprung 9 ist gerundet ausgebildet und bildet an einer Berührungslinie mit der ersten Spannbacke 3 eine Schwenkachse 10. Um diese Schwenkachse 10 ist die erste Spannbacke 3 gegenüber der zweiten Spannbacke 4 verschwenkbar.

Die erste Spannbacke 3 weist außerdem eine Anlagefläche 11 für einen Kopf 12 der Schraube 7 auf. Diese Anlagefläche 11 ist gegenüber einer Schraubenachse 13 in einem spitzen Winkel 14 angestellt. Hierdurch wird erreicht, dass der Schraubenkopf 12 nicht parallel zur Anlagefläche 11 ausgerichtet ist. Damit berührt der Schraubenkopf 12 die Anlagefläche 11 nicht flächig in einem Berührungspunkt 15, der im gezeigten Ausführungsbeispiel weitest möglich von der Schwenkachse 10 entfernt ist. Auf diese Weise ergibt sich eine größtmögliche Hebellänge 16 zwischen dem Berührungspunkt 15 des Kopfes 12 und der Schwenkachse 13.

In der zweiten Spannbacke 4 ist außerdem eine weitere Gewindebohrung 17 vorgesehen. Diese kann eine nicht dargestellte Schraube zur Festlegung eines Gegenstandes an der Säule 1 aufnehmen.

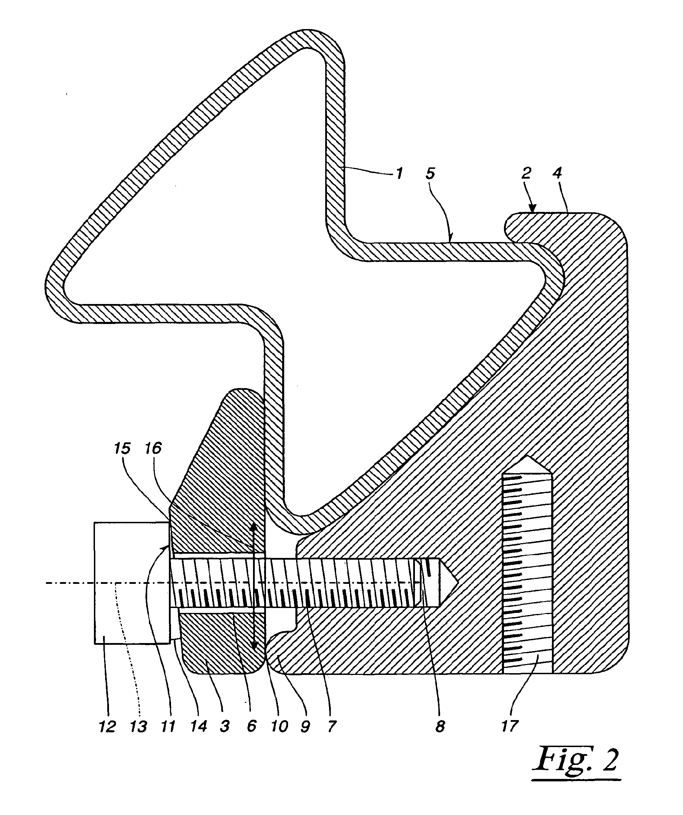

Die Figur 2 zeigt die Säule 1 mit der Klemmvorrichtung 2 gemäß Figur 1 in klemmender Lage. Dabei wurde die Schraube 7 so tief in die Gewindebohrung 8 der zweiten Spannbacke 4 eingedreht, bis die beiden Spannbacken 3, 4 fest an der Säule 1 anliegen. Auch in dieser Lage ist die Anlagefläche 11 noch spitzwinkelig zur Schraubenachse 13 angestellt. Damit berührt der Schraubenkopf 12 die Anlagefläche 11 auch in der Klemmlage noch in einem Berührungspunkt 15, der weitest möglich von der Schwenkachse 10 entfernt ist. Damit ist für den gesamten Spannvorgang gewährleistet, dass die größtmögliche Hebellänge 16 zur Verfügung steht. Auf diese Weise kann die gesamte Klemmvorrichtung 2 sehr klein aufgebaut werden, was unter beengten Platzverhältnissen wichtig ist.

### Bezugszeichenliste

- 1: Säule
- 2: Klemmvorrichtung
- 3: Erste Spannbacke
- 4: Zweite Spannbacke
- 5: Außenkontur
- 6: Durchgangsbohrung
- 7: Schraube
- 8: Gewindebohrung
- 9: Vorsprung
- 10: Schwenkachse
- 11: Anlagefläche
- 12: Kopf
- 13: Schraubenachse
- 14: spitzer Winkel
- 15: Berührungspunkt
- 16: Hebellänge
- 17: Gewindebohrung

## Patentansprüche

1. Klemmvorrichtung zum Halten mindestens eines Gegenstandes an einer Säule (1) eines Fahrzeugs, insbesondere eines Flurförderfahrzeugs, wobei die Klemmvorrichtung (2) mindestens eine erste (3) und zweite Spannbacke (4) aufweist, die die Säule (1) umfassen und von mindestens einer Schraube (7) gegeneinander verspannbar sind, welche eine Durchgangsbohrung (6) der ersten Spannbacke (3) durchsetzt und in der zweiten Spannbacke (4) festgelegt ist, wobei die erste Spannbacke (3) mindestens eine Anlagefläche (11) für einen Kopf (12) der mindestens einen Schraube (7) aufweist und die erste Spannbacke (3) beim Festziehen der mindestens einen Schraube (7) relativ zur zweiten Spannbacke (4) um eine Schwenkachse (10) verschwenkbar ist, an der sich die erste (3) und zweite Spannbacke (4) berühren, **dadurch gekennzeichnet, dass** die mindestens eine Anlagefläche (11) für den Kopf (2) der mindestens einen Schraube (7) in allen Lagen des Spannvorganges derart spitzwinkelig zur Schraubenachse (13) angestellt ist, dass der Kopf (12) der mindestens einen Schraube (7) die mindestens eine Anlagefläche (11) in einem Punkt (15) berührt, der weiter von der Schwenkachse (10) entfernt ist als die Schraubenachse (13).

2. Klemmvorrichtung nach Anspruch 1, **dadurch gekennzeichnet, dass** der Berührungspunkt (15) des Kopfes (12) der mindestens einen Schraube (7) weiter von der Schwenkachse (10) entfernt ist als eine Halbierende zwischen der Schraubenachse (13) und der von der Schwenkachse (10) am weitesten entfernte Punkt des Kopfes (12).

3. Klemmvorrichtung nach Anspruch 2, **dadurch gekennzeichnet, dass** der Berührungspunkt (15) des Kopfes (12) der mindestens einen Schraube (7) nahe einem am weitesten entfernten Punkt des Kopfes (12) liegt.

4. Klemmvorrichtung nach mindestens einem der Ansprüche 1 bis 3, **dadurch gekennzeichnet, dass** im Bereich der Schwenkachse (10) an der ersten (3) und/oder zweiten Spannbacke (4) mindesten ein zur anliegenden zweiten (4) und/oder ersten Spannbacke (3) gerichteter Vorsprung (9) vorgesehen ist.

5. Klemmvorrichtung nach Anspruch 4, **dadurch gekennzeichnet, dass** der mindestens eine Vorsprung (9) in Schwenkrichtung gerundet ausgebildet ist.

## Claims

1. Clamping device for holding at least one object on a pillar (1) of a vehicle, in particular of an industrial truck, wherein the clamping device (2) has at least one first clamping jaw (3) and at least one second clamping jaw (4), which surround the pillar (1) and can be braced against each other by at least one screw (7) which passes through a passage hole (6) in the first clamping jaw (3) and is secured in the second clamping jaw (4), wherein the first clamping jaw (3) has at least one bearing surface (11) for a head (12) of the at least one screw (7) and, when the at least one screw (7) is tightened, the first clamping jaw (3) is pivotable relative to the second clamping jaw (4) about a pivot axis (10) at which the first clamping jaw (3) and the second clamping jaw (4) are in contact, **characterized in that**, in all positions of the clamping operation, the at least one bearing surface (11) for the head (12) of the at least one screw (7) is positioned at an acute angle to the screw axis (13) such that the head (12) of the at least one screw (7) is in contact with the at least one bearing surface (11) at a point (15) which is further away from the pivot axis (10) than the screw axis (13).

2. Clamping device according to Claim 1, **characterized in that** the contact point (15) of the head (12) of the at least one screw (7) is further away from the pivot axis (10) than a bisecting line between the screw axis (13) and that point of the head (12) which is furthest away from the pivot axis (10).

3. Clamping device according to Claim 2, **characterized in that** the contact point (15) of the head (12) of the at least one screw (7) is located close to that point of the head (12) which is furthest away.

4. Clamping device according to at least one of Claims 1 to 3, **characterized in that** at least one projection (9) directed towards the adjacent second clamping jaw (4) and/or first clamping jaw (3) is provided in the region of the pivot axis (10) on the first clamping jaw (3) and/or the second clamping jaw (4).

5. Clamping device according to Claim 4, **characterized in that** the at least one projection (9) is of rounded design in the pivoting direction.

## Revendications

1. Dispositif de serrage pour fixer au moins un objet à une colonne (1) d'un véhicule, en particulier d'un chariot de manutention, le dispositif de serrage (2) présentant au moins une première mâchoire de serrage (3) et une deuxième mâchoire de serrage (4), lesquelles entourent la colonne (1) et peuvent être serrées l'une contre l'autre par au moins une vis (7), laquelle traverse un alésage traversant (6) de la première mâchoire de serrage (3) et est fixée dans la deuxième mâchoire de serrage (4), la première mâchoire de serrage (3) présentant au moins une surface d'appui (11) pour une tête (12) de l'au moins une vis (7) et la première mâchoire de serrage (3), lors du serrage de l'au moins une vis (7), pouvant pivoter par rapport à la deuxième mâchoire de serrage (4) autour d'un axe de pivotement (10) au niveau duquel la première (3) et la deuxième (4) mâchoire de serrage sont en contact, **caractérisé en ce que** l'au moins une surface d'appui (11) pour la tête (12) de l'au moins une vis (7) est inclinée dans toutes les positions de l'opération de serrage suivant un angle aigu par rapport à l'axe de la vis (13) de telle sorte que la tête (12) de l'au moins une vis (7) vienne en contact avec l'au moins une surface d'appui (11) en un point (15) qui est plus éloigné de l'axe de pivotement (10) que l'axe de la vis (13).

2. Dispositif de serrage selon la revendication 1, **caractérisé en ce que** le point de contact (15) de la tête (12) de l'au moins une vis (7) est plus éloigné de l'axe de pivotement (10) qu'une ligne médiane entre l'axe de la vis (13) et le point de la tête (12) le plus éloigné de l'axe de pivotement (10).

3. Dispositif de serrage selon la revendication 2, **caractérisé en ce que** le point de contact (15) de la tête (12) de l'au moins une vis (7) se situe à proximité d'un point de la tête (12) le plus éloigné.

4. Dispositif de serrage selon au moins l'une quelconque des revendications 1 à 3, **caractérisé en ce que** dans la région de l'axe de pivotement (10) au niveau de la première (3) et/ou de la deuxième (4) mâchoire de serrage est prévue au moins une saillie (9) orientée vers la deuxième mâchoire de serrage (4) appliquée et/ou vers la première mâchoire de serrage (3) appliquée.

5. Dispositif de serrage selon la revendication 4, **caractérisé en ce que** l'au moins une saillie (9) est réalisée sous forme arrondie dans la direction de pivotement.
